# EUROPÄISCHE PATENTANMELDUNG

(11) **EP 0 882 643 A1**
(43) Veröffentlichungstag der Anmeldung: **09.12.1998**
(21) Anmeldenummer: 98110128.0
(22) Anmeldetag: 04.06.1998
(51) Int. Cl.: B62D 49/06, B60K 35/00, B60N 2/14

(54) **Sitzverstellung bei einer landwirtschaftlichen Erntemaschine**

(30) Priorität: 06.06.1997 DE 19723824
(71) Anmelder: SAME DEUTZ-FAHR S.P.A., 24047 Treviglio (Bergamo) (IT)
(72) Erfinder: von Allwörden, Wilhelm, 89168 Oberstotzingen (DE)
(74) Vertreter: Quinterno, Giuseppe

(57) **Zusammenfassung**

Selbstfahrende landwirtschaftliche Erntemaschine mit einer Fahrerkabine sowie einem in der Fahrerkabine angeordneten Fahrersitz, wobei zumindest eine Lenkvorrichtung, insbesondere ein Lenkrad, zur manuellen Richtungssteuerung durch den Fahrer ebenfalls in der Fahrerkabine angeordnet ist, wobei erfindungsgemäß vorgesehen ist, daß der Fahrersitz in Richtung einer seitlichen Arbeitsvorrichtung der Erntemaschine verschwenkbar ist und die Erntemaschine eine Lenkautomatik zur automatischen Richtungssteuerung unabhängig von dem Fahrer aufweist.

## Beschreibung

Die Erfindung betrifft eine landwirtschaftliche Erntemaschine, insbesondere einen Feldhäcksler, gemäß den Merkmalen des Oberbegriffes des Patentanspruches 1.

Bei landwirtschaftlichen Erntemaschinen, die ein Erntegut aufnehmen und weiterverarbeiten, ist in der Fahrerkabine für den Fahrer der Erntemaschine ein Fahrersitz angeordnet. Im Blickfeld des Fahrers liegen innerhalb der Fahrerkabine Anzeige-, Kontroll- und Bedienelemente sowie im Frontbereich Arbeitsvorrichtungen, wie Schneid-, Aufnahmeeinrichtungen oder dergleichen. Weiterhin ist eine Lenkvorrichtung, insbesondere ein Lenkrad, zur manuellen Richtungssteuerung durch den Fahrer vorhanden.

Der Erfindung liegt nun die Aufgabe zugrunde, den Bedienkomfort einer selbstfahrenden landwirtschaftlichen Erntemaschine zu erhöhen und eine Ermüdung oder gesundheitliche Beeinträchtigungen des Fahrers der Erntemaschine zu vermeiden.

Diese Aufgabe ist dadurch gelöst, daß der Fahrersitz in Richtung einer seitlich der Erntemaschine zu beobachtenden Arbeitsvorrichtung verschwenkbar ist. Dadurch kann der Fahrer, ohne sich verrenken oder aufstehen zu müssen, nach Verschwenken des Sitzes die Arbeitsvorrichtung gut einsehen und bedienen. Vorzugsweise weist die Erntemaschine eine Lenkautomatik zur automatischen Richtungssteuerung unabhängig von dem Fahrer auf. Dies hat den Vorteil, daß die Erntemaschine mittels der Lenkautomatik selbsttätig und automatisch die Richtung, beispielsweise entlang einer Reihe des Erntegutbestandes, hält, während sich der Fahrer unabhängig davon dem Arbeitsvorgang der seitlichen Arbeitsvorrichtung widmen kann. Dabei hat er einen einwandfreien Blick und eine korrekte Haltung in Richtung der seitlichen Arbeitsvorrichtung. Bei einem Feldhäcksler beispielsweise kann durch die im Frontbereich angeordneten Schneid- und Aufnahmeeinrichtungen das Erntegut aufgenommen werden, während der Fahrer die Abgabe des gehäckselten Erntegutes über die seitliche Arbeitsvorrichtung auf einen parallel zu dem Feldhäcksler fahrenden Ladewagen beobachten und steuern kann. Da sich der Fahrer nicht auf die Lenkung der Erntemaschine, die die Lenkautomatik übernimmt, konzentrieren muß, kann er sich voll auf den Arbeitsvorgang konzentrieren und zwar in einer korrekten körperlichen Haltung. Dies verhindert eine zu schnelle Ermüdung des Fahrers und beugt langfristig gesundheitlichen Beeinträchtigungen vor.

In Weiterbildung der Erfindung sind zumindest teilweise Bedienelemente für die seitliche Arbeitsvorrichtung verschwenkbar. Somit werden nur solche Bedienelemente mit verschwenkt, die zur Einstellung und/oder Bedienung der seitlichen Arbeitsvorrichtungen erforderlich sind, während sämtliche weiteren Anzeige-, Kontroll- bzw. die übrigen Bedienelemente an ihrem Platz verbleiben. Dies hat den Vorteil, daß der Verschwenkmechanismus einschließlich der für die Bedienelemente erforderlichen Steuerbefehl-Übertragung einfach ausgeführt werden kann.

In vorteilhafter Weise sind die Bedienelemente in dem Fahrersitz integriert. So können die Bedienelemente beispielsweise in Form von Schaltern oder in Form eines Joy-Sticks in einer Armlehne des Fahrersitzes integriert sein, so daß der Fahrer während der Beobachtung und der Bedienung der seitlichen Arbeitsvorrichtung zumindest seinen Unterarm auf die Armlehne des Fahrersitzes legen kann und damit die Bedienelemente in Griffweite hat. Dies verhindert weiterhin wirksam Ermüdungserscheinungen.

In Weiterbildung der Erfindung ist alternativ oder ergänzend dazu, daß die Bedienelemente in dem Fahrersitz integriert sind, vorgesehen, daß die Bedienelemente an dem Fahrersitz angeordnet sind. Die Bedienelemente können in Form eines Multifunktionshebels ausgeführt sein, wobei dieser Multifunktionshebel über einen Schwenk- und/oder Dreharm an einer beliebigen Stelle des Fahrersitzes angeordnet ist. Es ist auch denkbar, diesen Arm auf dem Boden der Fahrerkabine anzuordnen und bei der Verschwenkung des Fahrersitzes mit zu verschwenken oder von einer Position in zumindest eine weitere Position umzustecken. Dies kann insbesondere dann leicht realisiert werden, wenn über die Bedienelemente des Multifunktionshebels elektrische Signale abgegeben werden, die von den Arbeitsvorrichtungen und dergleichen umgesetzt werden.

In Weiterbildung der Erfindung ist der Fahrersitz in zumindest zwei Positionen feststellbar. Zunächst ist es denkbar, daß der Fahrersitz zwischen zwei Positionen unter Krafteinwirkung des Fahrers verschwenkbar ist. Damit diese Krafteinwirkung nicht in einer Position, insbesondere einer Endposition, dauernd vom Fahrer aufgebracht werden muß, ist dieser zumindest in zwei Positionen feststellbar. Bei diesen beiden Positionen handelt es sich in bevorzugter Weise um eine erste Position, in die der Blick des Fahrers auf die im Frontbereich der Erntemaschine angeordneten Arbeitsvorrichtungen gerichtet ist, während die zweite Position eine solche ist, daß der Blick des Fahrers auf die seitliche Arbeitsvorrichtung gerichtet ist. Kann die seitliche Arbeitsvorrichtung mehrere Positionen einnehmen, kann entsprechend dieser Positionen auch der Fahrersitz verschwenkt und festgestellt werden. Weiterhin ist denkbar, die Verschwenkung des Fahrersitzes kraftunterstützt über ein Bedienelement auszulösen, wobei weiterhin auch die Feststellung mittels des Bedienelementes oder eines eigenen Bedienelementes durchgeführt werden kann. Zu diesem Zweck greift in geeigneter Weise im Verschwenkpunkt des Fahrersitzes eine Antriebsvorrichtung (zum Beispiel elektromotorisch) an. Eine automatische Verschwenkung des Fahrersitzes im Zusammenhang mit einer Verschwenkung der seitlichen Arbeitsvorrichtung ist ebenfalls realisierbar. Der Fahrersitz kann auch in einfacher Weise in den Endstellungen federbelastet rasten.

Die Lenkvorrichtung verbleibt beim Verschwenken des Fahrersitzes vorzugsweise in ihrer Position. Dies hat den Vorteil, daß nur solche Anzeige-, Kontroll- und Bedienelemente mit dem Fahrersitz gemeinsam mitverschwenkt werden, die für die Bedienung der seitlichen Arbeitsvorrichtung erforderlich sind. Da die automatische Lenkvorrichtung nicht der Bedienung der seitlichen Arbeitsvorrichtung dient, verbleibt diese in ihrer Position, d.h., daß diese Lenkvorrichtung nicht verschwenkbar sondern fest angeordnet ist. Dies hat den Vorteil, daß sich dadurch der konstruktive Aufwand verringert.

In Weiterbildung der Erfindung ist eine Anzeigevorrichtung an dem Fahrersitz angeordnet oder in diesem integriert. Neben den Bedienelementen für die Bedienung der seitlichen Arbeitsvorrichtung erhält der Fahrer der Erntemaschine über diese Anzeigevorrichtung über den Status von Antriebseinrichtungen der Erntemaschine, über die Verarbeitsprozesse innerhalb der Erntemaschine sowie weitere, geeignete Informationen. Es ist besonders von Vorteil, wenn von den Bedienelementen nur solche Bedienelemente mitverschwenkt werden, die für die Bedienung der seitlichen Arbeitsvorrichtung erforderlich sind, während von den Anzeige- und/oder Kontrollelementen in Form der Anzeigevorrichtung sämtliche Elemente mitverschwenkt werden, damit der Fahrer der Erntemaschine zu jeder Zeit, also auch dann, wenn der Fahrersitz seitlich verschwenkt wurde, alle Informationen über den Zustand der Erntemaschine und deren Vorrichtungen hat.

In Weiterbildung der Erfindung ist eine Einrichtung zur Erkennung des Feldendes oder des Endes des Erntegutbestandes, insbesondere einer Erntegutreihe, vorgesehen, wobei dann, wenn ein Ende festgestellt wurde, zumindest ein Hinweissignal an den Fahrer abgebbar ist. Dies hat den Vorteil, daß sich der Fahrer auf die Beobachtung und Bedienung der seitlichen Arbeitsvorrichtung konzentrieren kann und die Lenkautomatik die automatische Richtungssteuerung übernimmt, wobei der Fahrer jedoch rechtzeitig darauf hingewiesen wird, daß beispielsweise das Feldende oder ein Ende des Erntegutbestandes erreicht ist. Hierzu erhält er rechtzeitig ein Hinweissignal, um entweder den Fahrersifz zu verschwenken und sich dann zumindest auf den Lenkprozess zu konzentrieren oder den Lenkprozess über die Bedienelemente auszuführen, wobei diese dann derart ausgestaltet sind, daß sie in die Lenkautomatik eingreifen können. Es kann auch daran gedacht werden, daß dann, wenn ein Feldende oder das Ende des Erntegutbestandes erkannt wurde, weitere automatische Funktionen, wie zum Beispiel eine automatische Lenkung oder eine automatische Abschaltung des Aufnahme- oder Verarbeitungsprozesses, ausgelöst werden. Ein weiterer Schritt der Automatisierung besteht darin, daß dann, wenn das Ende festgestellt wurde, der Fahrersitz automatisch in Fahrtrichtung der Erntemaschine verschwenkt wird, um dem Fahrer den Zugriff auf die Lenkvorrichtung (Lenkrad oder dergleichen) zu ermöglichen.

Die erfindungsgemäße Verschwenkung des Fahrersitzes ist auf eine Vielzahl von selbstfahrenden landwirtschaftlichen Erntemaschinen, die in ihrem Seitenbereich eine oder mehrere Arbeitsvorrichtungen aufweisen, anwendbar. Unter Arbeitsvorrichtung ist auch eine solche zu verstehen, über die Erntegut oder dessen Bestandteile abgebbar oder weiterleitbar ist (wie beispielsweise die Korntankentleerung eines Mähdreschers).

Im folgenden ist die Erfindung anhand der Figuren erläutert.

Es zeigen:
- Figur 1 + 2:: Unterschiedliche Positionen des Fahrersitzes im Bezug auf die seitliche Arbeitsvorrichtung.
- Figur 3:: Frontansicht einer Erntemaschine,
- Figur 4:: Seitenansicht einer Erntemaschine,
- Figur 5:: einen Feldhäcksler mit Lenkautomatik.

Mit der Bezugsziffer 1 ist eine landwirtschaftliche Erntemaschine angedeutet, insbesondere ein Mähdrescher, die an sich bekannter Weise eine Fahrerkabine 2 aufweist, wobei innerhalb der Fahrerkabine 2 ein Fahrersitz 3 angeordnet ist. In Fahrtrichtung der Erntemaschine 1 betrachtet ist vor dem Fahrersitz 3 ein Lenkrad 4 (Lenkvorrichtung) angeordnet, wobei weiterhin um den Fahrersitz 3 Anzeigevorrichtungen 5 sowie Bedienelemente 6 angeordnet sind. Über das Lenkrad 4 ist die Erntemaschine 1 manuell in Abhängigkeit von Stellbefehlen des Fahrers lenkbar, während mit diesem Lenkrad 4 auch eine Lenkautomatik verbunden ist, die die selbsttätige und automatische Richtungssteuerung unabhängig von dem Fahrer vornimmt. Mit der Bezugsziffer 7 ist im Frontbereich der Erntemaschine 1 eine Arbeitsvorrichtung bezeichnet, bei der es sich beispielsweise bei einem Häcksler um ein Maisgebiß oder dergleichen handelt.

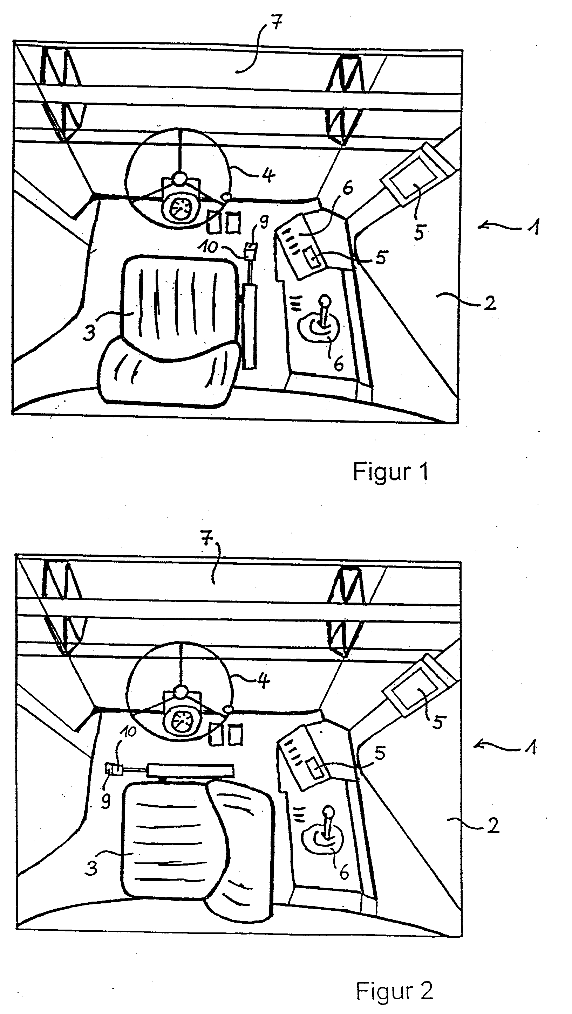

Eine seitliche Arbeitsvorrichtung 8 (siehe Figur 2) dient bei dem Feldhäcksler beispielsweise der Abgabe des gehäckselten Erntegutes an einen parallel mitfahrenden Ladewagen. Bei der seitlichen Arbeitsvorrichtung 8 kann es sich aber auch um eine weitere Aufnahmevorrichtung, eine Schneideinrichtung oder dergleichen handelt. Bei den Anzeigevorrichtungen 5 und den Bedienelementen 6 wird davon ausgegangen, daß sie stationär angeordnet sind und weitestgehend nur der Bedienung der im Frontbereich angeordneten Arbeitsvorrichtung 7 dienen. Zur Bedienung und Steuerung der seitlichen Arbeitsvorrichtung 8 sind an dem Fahrersitz 3 angeordnet oder in dem Fahrersitz 3 integriert verschwenkbare Bedienelemente 9 vorgesehen, die sich nur auf die Bedienung und Steuerung der seitlichen Arbeitsvorrichtung 8 beziehen. Weiterhin ist eine verschwenkbare Anzeigevorrichtung 10 vorgesehen, auf der zumindest das angezeigt wird, was auch teilweise oder in seiner Gesamtheit auf der Anzeigevorrichtung 5 angezeigt wird. Das heißt, der Informationsgehalt der Anzeigevorrichtung 10 bezieht sich nicht nur auf die seitliche Arbeitsvorrichtung 8, sondern geht darüber hinaus.

In Figur 1 ist gezeigt, daß der Fahrersitz 3 eine solche Position hat, daß der Blick des Fahrers im wesentlichen auf den Frontbereich (Arbeitsvorrichtung 7) der Erntemaschine 1 gerichtet ist. In Figur 2 ist eine Verschwenkung (beispielsweise in etwa um 90° gegenüber der Position, die in Figur 1 gezeigt ist) gezeigt, so daß sich der Blick des Fahrers auf dem Fahrersitz 3 auf die seitliche Arbeitsvorrichtung 8 richtet.

Mit der Bezugsziffer 11 ist noch eine Einrichtung zur Erkennung des Feldendes oder des Endes des Erntegutbestandes bezeichnet, wobei die Einrichtung 11 im Bereich der Arbeitsvorrichtung 7 angeordnet ist oder auch seitlich der Erntemaschine 1 angeordnet sein kann. Hierbei handelt es sich beispielsweise um eine Kamera, die den Erntegutbestand (Erntegutreihe) erfaßt, mit vorgebbaren Mustern vergleicht und bei Abweichung auf ein Ende erkennt.

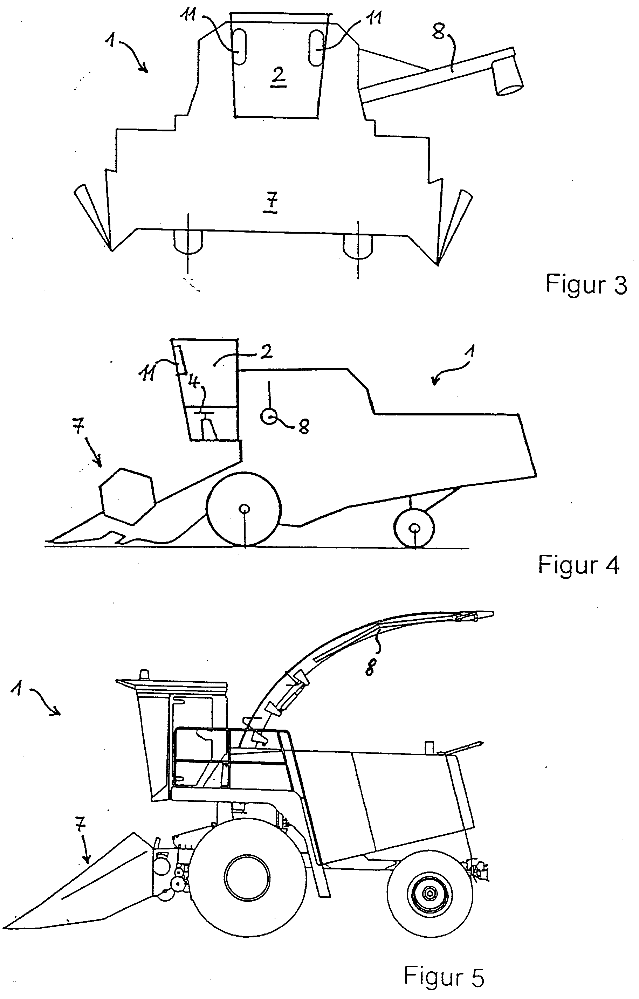

Figur 3 zeigt eine Frontansicht einer Erntemaschine, bei der es sich um einen Mähdrescher handelt. Auch hier sind diejenigen Elemente, insbesondere die seitliche Arbeitsvorrichtung in Form eines Korntankentleerungsrohres, gezeigt, die schon in Figur 1 gezeigt und beschrieben sind. Figur 4 zeigt eine Seitenansicht des Mähdreschers.

Figur 5 zeigt einen Feldhäcksler mit Lenkautomatik. Die Lenkautomatik besteht beispielsweise aus zwei Reihentastern A, die an der im Frontbereich angeordneten Arbeitsvorrichtung 7 befestigt sind. Diese tasten nach dem Einschalten der Anlage mittels des Fußschalters E ständig eine Pflanzenreihe ab und geben Impulse an einen elektronischen Regler B. Dieser verarbeitet die vom Lenkwinkelgeber C an den Hinterrädern gemeldete Stellung der Räder. Ein Steuergerät D korrigiert hydraulisch den Lenkeinschlag. Bei der seitlichen Arbeitsvorrichtung 7 handelt es sich hier um einen Auswurfbogen des Feldhäckslers für die Abgabe des gehäckselten Erntegutes an einen parallel versetzt fahrenden Ladewagen.

## Patentansprüche

1. Selbstfahrende landwirtschaftliche Erntemaschine (1) mit einer Fahrerkabine (2) sowie einem in der Fahrerkabine (2) angeordneten Fahrersitz (3), wobei zumindest eine Lenkvorrichtung, insbesondere ein Lenkrad (4), zur manuellen Richtungssteuerung durch den Fahrer ebenfalls in der Fahrerkabine (2) angeordnet ist,
**dadurch gekennzeichnet**, daß der Fahrersitz (3) in Richtung einer seitlich der Erntemaschine (1) zu beobachtenden Arbeitsvorrichtung (8) verschwenkbar ist.

2. Selbstfahrende landwirtschaftliche Erntemaschine (1) nach Anspruch 1,
**dadurch gekennzeichnet**, daß die Erntemaschine (1) eine Lenkautomatik zur automatischen Richtungssteuerung unabhängig von dem Fahrer aufweist.

3. Selbstfahrende landwirtschaftliche Erntemaschine (1) nach einem der Ansprüche 1 oder 2,
**dadurch gekennzeichnet**, daß zumindest teilweise Bedienelemente (9) für die seitliche Arbeitsvorrichtung (7) mitverschwenkbar sind.

4. Selbstfahrende landwirtschaftliche Erntemaschine (1) nach Anspruch 3,
**dadurch gekennzeichnet**, daß die Bedienelemente (9) in dem Fahrersitz (3) integriert sind.

5. Selbstfahrende landwirtschaftliche Erntemaschine (1) nach Anspruch 3 oder 4,
**dadurch gekennzeichnet**, daß die Bedienelemente (9) an dem Fahrersitz (3) angeordnet sind.

6. Selbstfahrende landwirtschaftliche Erntemaschine (1) nach einem der vorhergehenden Ansprüche,
**dadurch gekennzeichnet**, daß der Fahrersitz (3) in zumindest zwei Positionen feststellbar ist.

7. Selbstfahrende landwirtschaftliche Erntemaschine (1) nach einem der vorhergehenden Ansprüche,
**dadurch gekennzeichnet**, daß die Lenkvorrichtung (Lenkrad 4) beim Verschwenken des Fahrersitzes (3) in ihrer Position verbleibt.

8. Selbstfahrende landwirtschaftliche Erntemaschine (1) nach einem der vorhergehenden Ansprüche,
**dadurch gekennzeichnet**, daß eine Anzeigevorrichtung (10) an dem Fahrersitz (3) angeordnet oder in diesem integriert ist.

9. Selbstfahrende landwirtschaftliche Erntemaschine (1) nach einem der vorhergehenden Ansprüche,
**dadurch gekennzeichnet**, daß eine Einrichtung (11) zur Erkennung des Feldendes oder des Endes des Erntegutbestandes, insbesondere eine Erntegutreihe, vorgesehen ist, wobei dann, wenn ein Ende festgestellt wurde, zumindest ein Hinweissignal an den Fahrer abgebbar ist.
